# EUROPÄISCHE PATENTANMELDUNG

(11) **EP 1 852 326 A2**
(43) Veröffentlichungstag der Anmeldung: **07.11.2007**
(21) Anmeldenummer: 07001175.4
(22) Anmeldetag: 19.01.2007
(51) Int. Cl.: B61D 17/02, B61F 19/04

(54) **Verminderung einer Aufwirbelung von losen Objekten aus dem Gleisbett bei der Überfahrt von Zügen**

(30) Priorität: 03.05.2006 DE 102006020800
(71) Anmelder: Deutsche Bahn AG, 10785 Berlin (DE)
(72) Erfinder: Deeg, Peter, 80801 München (DE); Herb, Joachim, 82166 Gräfelfing (DE); Kaltenbach, Hans-Jakob, Dr., 80805 München (DE); Claus, Peter, Dr., 80634 München (DE)
(74) Vertreter: Zinken-Sommer, Rainer

(57) **Zusammenfassung**

Die Erfindung betrifft eine Vorrichtung zur Verminderung einer Aufwirbelung von losen Objekten aus dem Gleisbett bei der Überfahrt von Zügen. Des Weiteren beinhaltet die Erfindung ein Verfahren zur Bewertung der Anfälligkeit einer Zuggeometrie für das Aufwirbeln von Schottersteinen und der Schadensanfälligkeit durch Schotterflug.

Erfindungsgemäß werden zur Vermeidung der Auslösung von Schotterflug durch ein bestimmtes Fahrzeug Leitelemente (5.3) und/oder Verkleidungen an dem Fahrzeug angebracht, die bündig zu Konturen der Wagenkastenunterseite (1.1) abschließen und fest oder beweglich an der Wagenkastenunterseite (1.1) angebracht sind.

Weiterhin wird erfindungsgemäß die Exposition von Bauteilen des Drehgestells oder Bauteilen im Drehgestell (1.2) oder Bauteilen am Unterboden des Wagenkastens bezüglich Unterfluranströmung reduziert, indem die Bauteile mit ihrer Unterkante gleich hoch oder oberhalb der unteren Fahrzeugkontur angeordnet sind.

## Beschreibung

Die Erfindung betrifft eine Vorrichtung zur Verminderung einer Aufwirbelung von losen Objekten aus dem Gleisbett bei der Überfahrt von Zügen. Des Weiteren beinhaltet die Erfindung ein Verfahren zur Bewertung der Anfälligkeit einer Zuggeometrie für das Aufwirbeln von Schottersteinen und der Schadensanfälligkeit durch Schotterflug.

Diese Vorrichtung und dieses Verfahren werden insbesondere bei Schienenbahnen angewendet, bei denen Fahrzeuge mit hoher Geschwindigkeit über ein Gleisbett mit Schotteroberbau verkehren.

Die Erfindung stellt eine Weiterentwicklung der Erfindung aus DE 10 2004 041 363 A1 dar. In DE 10 2004 041 363 A1 wurden Maßnahmen angegeben, die eine strömungsmechanische Rauhigkeit eines Unterbodens des Zuges vermindern. Dies umfasst insbesondere eine aerodynamische Formgebung von Bauteilen am Unterboden des Zuges. Diese aerodynamische Formgebung erfolgt z.B. in Tropfenform oder in Form eines Tragflächenprofils und betrifft Bauteile am Unterboden des Zuges, wie Antennen, Sensoren, Anbauteilen, Halterungen, Bauteile des Drehgestells, Bauteile des Wagenübergangs und Bauteile des Zugunterbodens

Aus DE 10 2004 041 090 A1 sind Deflektor-Elemente oder Anprallverkleidungen bekannt, die aufgewirbelte Steine abfangen und von dem zu schützenden Bauteil ablenken. Diese Anprallverkleidungen sind jedoch insbesondere nicht in der Lage, die aerodynamische Ursache des Aufwirbelns von Schottersteinen zu unterbinden.

Es ist somit Aufgabe der Erfindung, eine Weiterentwicklung der Erfindung aus DE 10 2004 041 363 A1 anzugeben.

Diese Aufgabe wird in Verbindung mit dem jeweiligen Oberbegriff erfindungsgemäß für die Vorrichtung durch die in den Ansprüchen 1 und 14 angegebenen Merkmale sowie für das Verfahren durch die in Anspruch 23 angegebenen Merkmale gelöst.

Die weiteren Unteransprüche beinhalten vorteilhafte Ausführungsformen der erfindungsgemäßen Lösung aus den Ansprüchen 1 und 14 bzw. Anspruch 23.

Der prinzipielle Unterschied zwischen Anprallverkleidung einerseits und aerodynamisch wirkenden Maßnahmen wird aus dem Vergleich der Wirkmechanismen deutlich: Anprallverkleidungen sollen exponierte Fahrzeugoberflächen, die in Fahrtrichtung zeigen, vor aufgewirbelten Steinen schützen. Dagegen konzentrieren sich aerodynamische Luftleitelemente und Verkleidungen auf Bauteile und Flächen, die eine ungünstige Strömungsführung im Unterflurbereich bewirken. Dazu zählen häufig rückspringende Kanten, Kavitäten im Unterboden und dergleichen, die gerade nicht in besonderer Weise gegenüber Steinaufprall exponiert sind.

In der Praxis wird es allerdings auch Fälle geben, bei denen das gleiche Bauteil sowohl als Anprallschutz als auch als Luftleitelement wirkt.

Noch ein weiterer Aspekt zur Abgrenzung von Anprallverkleidung und Luftleitelemente ist zu erwähnen: eine Anprallverkleidung entfaltet ihre Wirksamkeit auch dann, wenn die Fläche der Verkleidung mit der Fahrtrichtung einen flachen Winkel von bis zu ca. 30° bildet. Dagegen erfordert die Installation von Luftleitelementen, dass diese weitgehend mit der Fahrzeugkontur fluchten müssen. Aus der Strömungsmechanik ist bekannt, dass bereits bei leichten Richtungsänderungen an tangential überströmten Flächen Strömungsablösung mit unerwünschten Nebeneffekten wie erhöhtem Turbulenzgrad und Verwirbelung einsetzt. Daher ist für die Entfaltung der vollen Wirksamkeit von Luftleitelementen wichtig, dass diese auf der Abströmseite nur maximal bis zu 5-10° gegenüber der Fahrzeugaußenkontur abgewinkelt montiert werden.

Erfindungsgemäß werden zur Vermeidung der Auslösung von Schotterflug durch ein bestimmtes Fahrzeug die aerodynamischen Lasten reduziert, die das Fahrzeug auf den Oberbau ausübt, und zwar speziell durch:
- Abbau der Spitzenwerte und eine großflächige Verringerung des Mittelwerts der Wandschubspannung, die die vom Fahrzeug mitgerissene Luft auf den Oberbau ausübt Mittelwert bedeutet hierbei einen Mittelwert über ein Ensemble von Zugüberfahrten. Großflächig bedeutet hierbei einen Flächenmittelwert bzw. einen Mittelwert in Längsrichtung über einen Abschnitt in der Größenordnung von einer Wagenlänge. Die Verminderung der mittleren Lasten ist mindestens so wichtig wie der Abbau von Spitzenwerten, denn eine Strömung muss eine Mindestzeit einwirken, bis Steine ausreichend stark beschleunigt werden können, um das Schotterbett zu verlassen
- eine Reduzierung des Turbulenzgrades der Strömung im Spalt zwischen Wagenkasten und Oberbau und damit einhergehend der Schwankungsintensität der Wandschubspannung. Diese ist direkt korreliert mit der Existenz von Wirbelstrukturen, die an den umströmten Teilen und Kavitäten des Unterflurbereichs entstehen
- eine Verringerung des Impulsübertrags zwischen den Luftschichten hoher Geschwindigkeit entlang der Fahrzeugunterseite und der Luftschicht niedriger Geschwindigkeit entlang des Oberbaus
- eine Unterbindung von Sekundärströmungen, insbesondere der quer zur Fahrtrichtung gerichteten mittleren Strömung im Ringspalt zwischen den Wagenübergängen.

Dies wird nach Anspruch 1 erfindungsgemäß dadurch erreicht, dass die Luftleitelemente und/oder Verkleidungen bündig zu Konturen der Wagenkastenunterseite abschließen und fest oder beweglich an der Wagenkastenunterseite angebracht sind.

Insbesondere wird hierdurch ein Wagenübergang bündig zu Wagenkonturen abgeschlossen und zur Gewährleistung der Freigängigkeit werden die Leitelemente vertikal versetzt bzw. lamellenartig aneinander vorbeigeführt. So wird bei einem Wagenübergang durch überlappende Elemente zwischen den beiden Wagenkästen eine bündige Kontur geschaffen, die zu keinen Verwirbelungen der Luft und damit zu keinem Aufwirbeln von Schottersteinen führt. Insbesondere verringern bündig zur Wagenkastenunterseite horizontal angebrachte Elemente die Fläche der Drehgestellaussparung und reduzieren damit ebenfalls die Intensität der Turbulenz im Spalt zwischen Wagenunterseite und Oberbau.

Eine Unterbindung der Querströmung im Ringspalt zwischen den Wagen reduziert die Wirbelbildung im Wagenübergangsbereich und trägt zur Abschirmung der Schichten langsamer Luft in Oberbaunähe von der vom Fahrzeug mitgerissenen Luft hoher Geschwindigkeit bei.

Bewegliche Luftleitelemente und Verkleidungen sind mit speziellen Vorrichtungen zum Ausgleich von Relativbewegungen zwischen zwei aufeinander folgenden Wagen und/oder zwischen Wagenkasten und Drehgestell versehen.

Hierbei werden insbesondere Lamellen- oder fächerartige, in Längs- oder Querrichtung längenveränderliche Luftleitelemente verwendet, die die Freigängigkeit gewährleisten und auf die Kinematik der Drehgestelle abgestimmt sind.

Dies wird insbesondere durch eine Horizontalabdeckung der Drehgestellaussparung gewährleistet, die je nach Grad der Verdrehung des DG gegenüber dem Wagenkasten ihre Fläche ändert.

Weiterhin sind die Luftleitelemente vorteilhaft gelenkig befestigt, mit einer Aufhängung, die die Bewegungen aus dem Einfedern zwischen Wagenkasten und Drehgestell kompensiert. Bei einer Stellung der Federn in ihrem Arbeitspunkt sind die Leitelemente fluchtend mit der Wagenkastenaußenkontur angeordnet und stellen damit einen geringen Widerstand für die strömende Luft dar.

Die Verkleidungen sind flexibel und/oder verformbar ausgeführt, insbesondere aus Gummimaterial. Bei Fahrt auf geraden Gleisabschnitten nehmen sie somit eine aerodynamisch optimale Form an und gewährleisten einen fluchtenden Abschluss mit der Wagenkastenkontur. Zusätzlich können die Verkleidungen ähnlich wie ein Faltenbalg Verstärkungen aus Metall aus Gründen der Stabilität und des Formerhalts aufweisen.

Die Luftleitbleche werden insbesondere durch Gestänge in einer optimalen Position gehalten bzw. berührungsfrei zu einem beweglichen Bauteil mitgeführt.

Weiterhin sind nach Anspruch 14 die Bauteile des Drehgestells oder die Bauteile im Drehgestell mit ihrer Unterkante gleich hoch oder oberhalb der unteren Fahrzeugkontur, insbesondere dem Unterboden des Fahrzeugs, angeordnet.

Fährt ein Zug mit hoher Geschwindigkeit auf einem Gleis, bildet sich unter dem Fahrzeug eine sogenannte Schleppströmung (Couetteströmung) aus. Wegen der Haftbedingung hat die Luft in Fahrzeugnähe und in den an der Fahrzeugunterseite befindlichen Kavitäten annähernd die Geschwindigkeit des Fahrzeugs. Über den Spalt zwischen Wagenunterseite und Oberbau hinweg fällt die Geschwindigkeit der vom Fahrzeug mitgerissenen bzw. mitbeschleunigten Luft bis auf Null ab. Alle Bauteile, die in dieser vorwiegend in Fahrtrichtung gerichteten Luftströmung liegen und quer zu der Luftströmung angeordnet sind, führen zu Verwirbelungen der Luftströmung. Je stärker ausgeprägt die Verwirbelung der Spaltströmung ist, desto höher ist die Geschwindigkeit in Oberbaunähe und damit steigt die aerodynamische Tangentialkraft auf den Gleisschotter.

Diese Luftströmung kann bei Überschreiten bestimmter Schwellenwerte der Wandschubspannung Material des Gleisbettes, insbesondere Schottersteine hochreißen und gegen die Wagenkastenunterseite, insbesondere jedoch gegen besonders exponierte Bauteile schleudern.

Besonderer Vorteil der Erfindung ist es somit, dass Bauteile, die zu einer Verwirbelungen der Luftströmung führen, aus dem Luftstrom herausgehoben werden und damit eine Verwirbelungen der Luftströmung vermindert oder unterbunden wird.

Derartige Bauteile sind insbesondere der Fahrmotor, der innerhalb des Drehgestells angeordnet ist und aufgrund seiner Größe zu einer besonders ausgeprägten Verwirbelung der Luftströmung führen kann und besonders durch Steinschlag gefährdet ist. Schließt also die Unterkante des Fahrmotors etwa bündig mit der Unterkante des Wagenkastens ab, wird die Verwirbelung besonders effizient vermindert.

Weiterhin ist ein derartiges Bauteil insbesondere die Bremsvorrichtung des Drehgestells. Bremsvorrichtungen, die besonders weit in die Luftströmung hineinragen, sind insbesondere absenkbare Bremsvorrichtungen und hierbei insbesondere eine Magnetschienen- oder eine Wirbelstrombremse.

Deshalb besteht vorteilhaft eine derartige absenkbare Bremsvorrichtungen aus separat vertikal absenkbaren Bremselementen, die keine Querverbindung zwischen den beiden in Längsrichtung über den Gleisen positionierten Elementen aufweisen.

Alternativ ist eine Querverbindung, insbesondere ein Spurhalter, einer absenkbaren Bremseinrichtung so geformt ist, dass ihre Unterkante im eingefahrenen oder abgesenkten Zustand höher als die Wagenkastenunterseite angeordnet ist, damit nicht aus der Wagenkontur herausragt und deshalb im "Windschatten" anderer Bauteile liegt.

Weiterer besonderer Vorteil der Erfindung ist, dass der aerodynamischen Widerstand des Fahrzeuges reduziert und Geräuschemissionen vermindert werden. Die Erfindung beinhaltet somit auch eine energetische (Verminderung der erforderlichen Traktionsenergie) und eine akustische Wirksamkeit.

Zur Bewertung der Anfälligkeit einer Zuggeometrie für das Aufwirbeln von Schottersteinen und der Schadensanfälligkeit durch Schotterflug werden gemäß Anspruch 23 in einem Berechnungsverfahren die aerodynamischen Kenngrößen Strömungsgeschwindigkeit, Wandschubspannung und Turbulenzgrad auf Höhe des Schotteroberbaus aus Simulationsrechnungen oder Messungen an der Strecke oder im Labor bestimmt. Ausgehend von den Simulationsrechnungen oder von Messdaten wird die Freisetzungsrate von Schottersteinen bestimmt. Vom lokalen Betrag der aerodynamischen Kenngrößen auf der Schotteroberfläche ist die Rate abhängig, mit der Schottersteine aufgewirbelt werden.

Durch ballistische Modellrechnungen unter Berücksichtigung stochastischer Einflüsse aus der Umgebung wird die Flugbahn von einem oder mehreren Schottersteinen bestimmt. Dies geschieht insbesondere dadurch, dass die Kontakte des Schottersteins mit der Geometrie des Oberbaus und der des Zuges durch Stoßgesetze bzw. komplexere, stochastische und/oder empirische Reflektionsmodelle modelliert werden. Für die Stoßgesetze bzw. die komplexeren, stochastischen und/oder empirischen Reflektionsmodelle für einen Stein wird insbesondere dessen Eintrittswinkel, Austrittswinkel, Geschwindigkeit vor und nach dem Auftreffen, Rotation, Masse, Geometrie, Materialeigenschaften und/oder Zerteilung berücksichtigt.

Für ein ausreichend großes Ensemble von Einzelfällen werden die Modellrechnungen mehrfach mit stochastisch variierenden Anfangsbedingungen zur Bestimmung stochastischer Ergebnisgrößen wie der Trefferhäufigkeiten exponierter Bauteil wiederholt. Kontakte von bewegten Schottersteinen mit dem Zug und oder dem Oberbau werden gezählt und die Kontakte bzw. die Trefferhäufigkeiten zu geometrischen Bauteilen des Zuges bzw. des Oberbaus zugeordnet. Schließlich wird ein Schadensausmaß durch Zuordnung von Schadensanfälligkeiten und Schadenswerten zu den Trefferorten der Zug- und/oder Oberbaugeometrie bewertet.

Die Erfindung ist nicht nur anwendbar bei Schienenfahrzeugen, sondern insbesondere auch bei
- Straßenfahrzeugen, die durch ihre Überfahrt lose auf oder in der Fahrbahn oder dem Straßenbelag liegende Objekte aufwirbeln, und
- startenden oder landenden Flugzeugen, die während des Starts oder der Landung lose auf oder in der Start- und Landebahn liegende Objekte aufwirbeln.

Die Erfindung wird nachstehend anhand von mehreren Ausführungsbeispielen und einer Zeichnung mit fünf Figuren näher erläutert. Die Figuren zeigen hierbei in
- **Fig. 1**: schematisch eine Verlegung von Spurhaltern einer Wirbelstrombremse in das Innere einer Drehgestellaussparung.
- **Fig. 2**: schematisch eine Kombination aus festen und beweglichen Leitblechen zur Abdeckung eines Wagenübergangs,
- **Fig. 3**: schematisch eine Kombination aus festen und flexiblen Abdeckungen an einem Wagenübergang,
- **Fig. 4**: schematisch eine Kombination aus festen und flexiblen Abdeckungen an einer Drehgestellaussparung,
- **Fig. 5**: schematisch drehbar gelagerte Abdeckungen an einer Drehgestellaussparung,

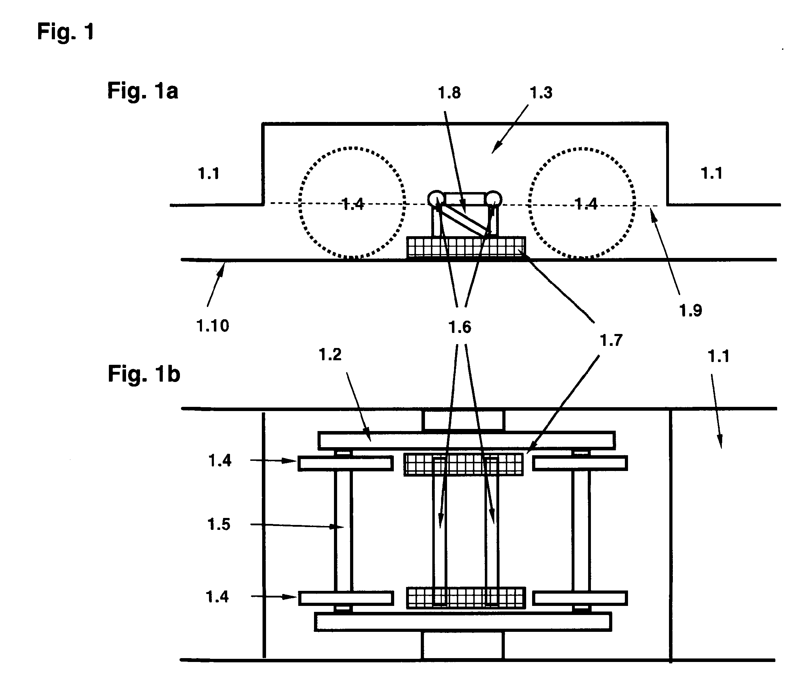

In einem ersten vorteilhaften Ausführungsbeispiel erfolgt gemäß **Fig. 1** eine Verlegung von Spurhaltern 1.6 einer Wirbelstrombremse 1.7 in das Innere einer Aussparung 1.3 für ein Drehgestell 1.2. **Fig. 1a** zeigt hierbei die Anordnung in Seitenansicht, **Fig. 1b** in Draufsicht von unten.

Durch ein Drehgestell 1.2 werden die mit einer Radsatzwelle 1.5 verbundenen Räder 1.4 gehalten. Das Drehgestell 1.2 befindet sich dabei in einer Aussparung 1.3 eines Wagenkastens. Der Wagenkasten wird nach unten hin durch die Wagenkastenunterseite 1.1 begrenzt. Fährt ein Zug mit hoher Geschwindigkeit auf einem Gleis 1.10, tritt unterhalb des Wagenkastens eine Schleppströmung in Fahrtrichtung auf. Alle Bauteile, die in dieser Luftströmung liegen und quer zu der Luftströmung angeordnet sind, führen zu Verwirbelungen der Luftströmung. Die Spurhalter 1.6 einer Wirbelstrombremse 1.7 sind derartige quer zur Luftströmung angeordnete Bauteile. Eine Wirbelstrombremse 1.7 besteht aus Wirbelstrommagneten, die durch ein Gestänge 1.8 gehalten werden. Jeweils eine Wirbelstrombremse 1.7 ist über den beiden Schienen des Gleises 1.10 angeordnet, wobei die beiden Wirbelstrombremsen 1.7 durch Spurhalter 1.6 miteinander verbunden werden.

Zur Verminderung von Verwirbelungen werden die Spurhalter 1.6 erfindungsgemäß so angeordnet, dass sie oberhalb des Niveaus 1.9 der Unterseite 1.1 des Wagenkastens liegen. Hierdurch wird gewährleistet, dass die quer zur Luftströmung stehenden Bauteile der Wirbelstrombremse 1.7 nicht im Bereich der Luftströmung sondern im Windschatten anderer Bauteile der Fahrzeugunterseite liegen.

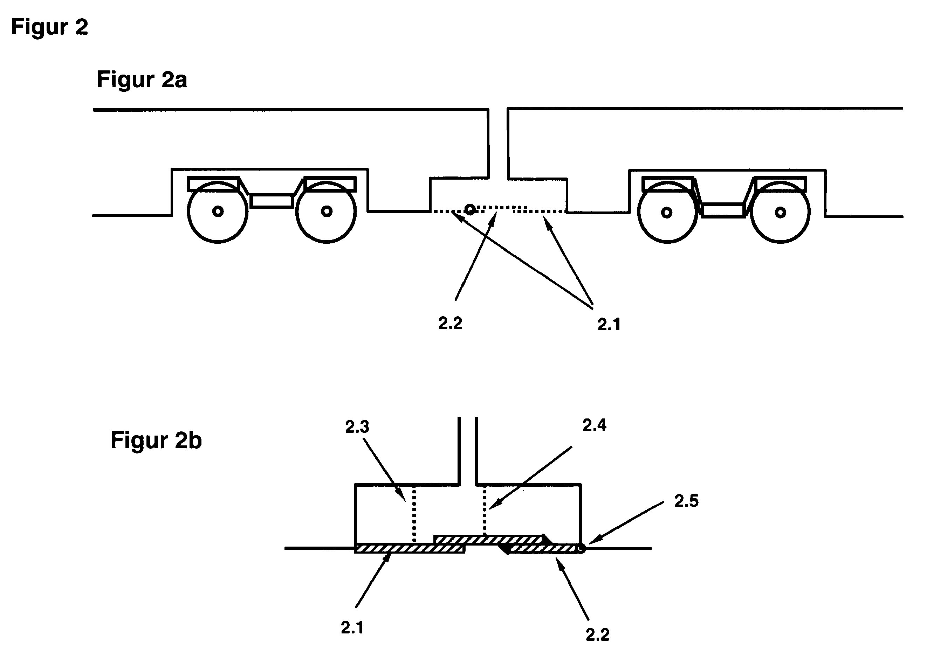

In einem zweiten vorteilhaften Ausführungsbeispiel wird gemäß **Fig. 2a** jeweils ein Leitblech 2.1 fest an der Unterkante des jeweiligen Wagenkastens befestigt. Ein beweglich befestigtes Luftleitelement 2.2 deckt den Zwischenraum zwischen den beiden Luftleitelementen 2.1 ab, so dass der Übergang zwischen den beiden Wagenenden bündig abgeschlossen ist.

Alternativ ist gemäß **Fig. 2b** ein Luftleitelement 2.1 fest an der Unterseite des Wagenkastens des einen Wagens befestigt und ein Luftleitelement 2.3 über ein Gelenk 2.5 beweglich an der Unterkante des Wagenkastens des zweiten Wagens befestigt. Hierbei wird Leitelement 2.1 über eine Kette oder Strebe 2.3 zusätzlich und Leitelement 2.2 über eine Kette oder Strebe 2.4 in seiner Normallage gehalten. Leitelement 2.2 überlappt Leitelement 2.1 an dessen Oberseite, so dass der Übergang zwischen den beiden Wagenenden bündig abgeschlossen ist.

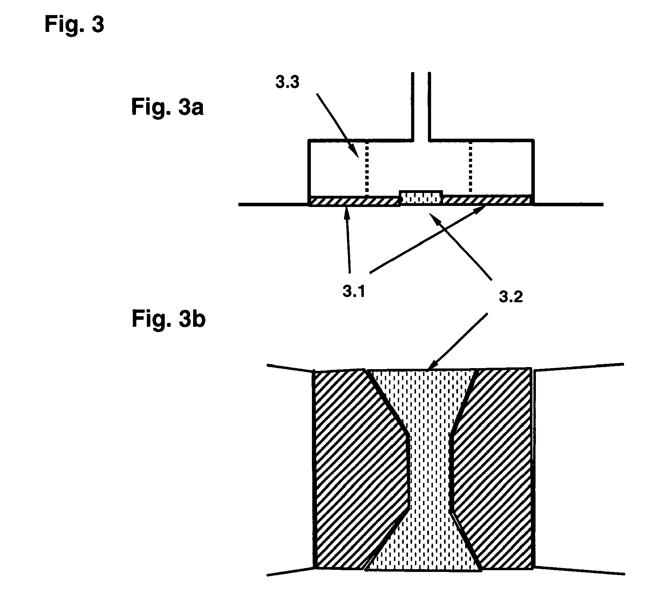

In einem dritten vorteilhaften Ausführungsbeispiel wird gemäß **Fig. 3** der Wagenübergang durch eine Kombination aus fest an den Wagenkasten befestigten Luftleitelementen 3.1 und einer flexiblen Abdeckung 3.2 bündig abgeschlossen. **Fig. 3a** zeigt hierbei die Anordnung in Seitenansicht, **Fig. 3b** in Draufsicht von unten. Die beiden fest an den Wagenkasten befestigten Leitelemente 3.1 sind über eine Kette oder Strebe 3.3 zusätzlich an den jeweiligen Wagenkästen befestigt. Die flexible Abdeckung 3.2 zwischen den beiden Leitelementen 3.1 wird insbesondere gebildet durch Lamellen, einen Fächer oder einen Faltenbalg.

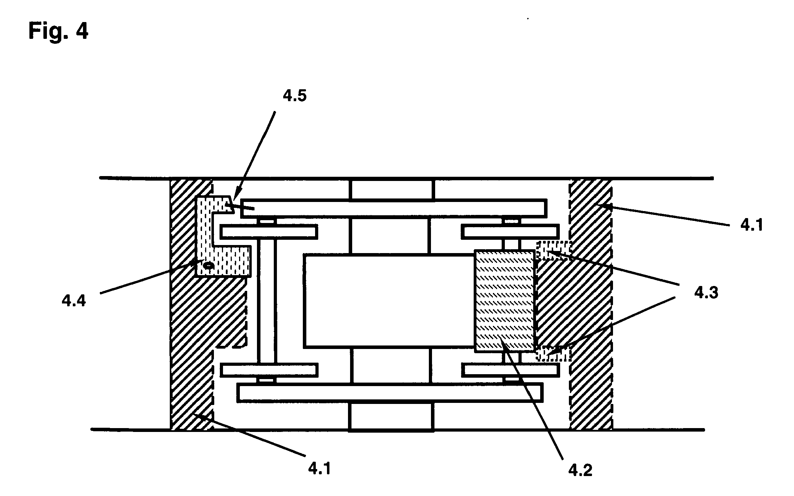

In einem vierten vorteilhaften Ausführungsbeispiel wird gemäß **Fig. 4** eine Drehgestellaussparung in einem Wagenkasten durch eine Kombination aus fest am Wagenkasten befestigten Luftleitelementen 4.1, flexiblen Abdeckungen 4.2 und 4.3 sowie drehbar gelagerten Abdeckungen 4.4 bündig abgeschlossen. Die flexible Abdeckung 4.2 deckt die Lücke zwischen den am Wagenkasten befestigten Leitelement 4.1 und dem Drehgestell ab. Die flexible Abdeckung 4.3 hingegen ist so angebracht, dass sie bei Verdrehen des Drehgestells z.B. bei einer Kurvenfahrt in den Konturen des festen Leitelements 4.1 verschwindet. Ein Gestänge 4.5 steuert die drehbar gelagerte Abdeckung 4.4 in Abhängigkeit von der Stellung des Drehgestells.

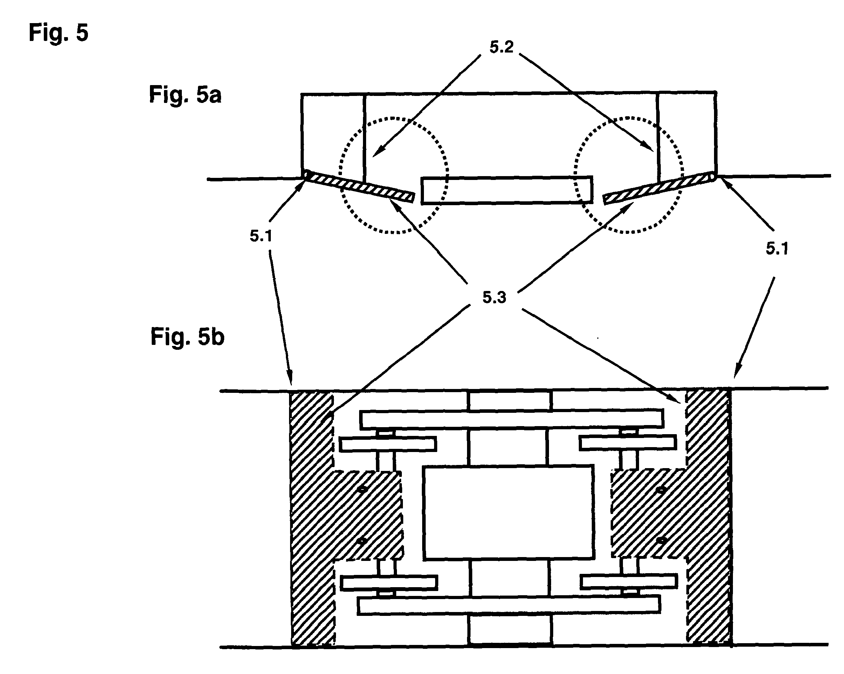

In einem fünften vorteilhaften Ausführungsbeispiel wird gemäß Fig. 5 eine Drehgestellaussparung in einem Wagenkasten durch zwei beweglich am Wagenkasten befestigte Leitelemente 5.3 bündig abgeschlossen. **Fig. 5a** zeigt hierbei die Anordnung in Seitenansicht, **Fig. 5b** in Draufsicht von unten. Die beiden Leitelemente 5.3 sind jeweils über Gelenke 5.1 drehbar an der Unterseite des Wagenkastens gelagert und werden zusätzlich über Gestänge 5.2 gehalten. Die Gestänge 5.2 sind hierbei so ausgeführt, dass sie die Stellung der Luftleitelemente 5.3 in Abhängigkeit von der Einfederung des Wagenkastens gegenüber dem Drehgestell verändern, so dass die Fahrzeugbegrenzungslinie unter keiner Bedingung den zulässigen Freiraum verletzt.

### Bezugszeichenliste

- 1.1: Unterseite eines Wagenkastens
- 1.2: Drehgestell
- 1.3: Aussparung für das Drehgestell
- 1.4: Eisenbahnrad
- 1.5: Radsatzwelle
- 1.6: Spurhalter einer Wirbelstrombremse
- 1.7: Wirbelstrombremse
- 1.8: Gestänge
- 1.9: Niveau der Unterseite des Wagenkastens
- 1.10: Gleis (Schienenoberkante)
- 2.1: fest am Wagenkasten befestigtes Luftleitelement
- 2.2: beweglich befestigtes Leitelement
- 2.3: Kette oder Strebe
- 2.4: Kette oder Strebe
- 2.5: Gelenk

- 3.1: fest am Wagenkasten befestigtes Luftleitelement
- 3.2: flexible Abdeckung
- 3.3: Kette oder Strebe
- 4.1: fest am Wagenkasten befestigtes Luftleitelement
- 4.2: flexible Abdeckung
- 4.3: flexible Abdeckung
- 4.4: drehbar gelagerte Abdeckung
- 4.5: Gestänge
- 5.1: Gelenk
- 5.2: Gestänge
- 5.3: beweglich am Wagenkasten befestigtes Luftleitelement

## Patentansprüche

1. Vorrichtung zur Verminderung einer Aufwirbelung von losen Objekten aus dem Gleisbett bei der Überfahrt eines Zuges, wobei aerodynamische Leitelemente und/oder Verkleidungen aus Stahl, Kunststoff oder Verbundwerkstoffen an oder um Bauteile am Unterboden des Zuges und/oder eine Voll- oder Teilverkleidung an einem Drehgestell und/oder einem Wagenübergang eine strömungsmechanische Rauhigkeit und/oder aerodynamisch ungünstige Formgebungen (Kavitäten für Drehgestelle oder Wagenübergänge oder strömungsexponierte Bauteile) vermindern, **dadurch gekennzeichnet, dass** die Leitelemente und/oder Verkleidungen bündig zu Konturen der Wagenkastenunterseite abschließen und fest oder beweglich an der Wagenkastenunterseite angebracht sind.

2. Vorrichtung nach Anspruch 1, **dadurch gekennzeichnet, dass** fest angebrachte Luftleitelemente und Verkleidungen den Wagenübergang bündig zu Wagenkonturen abschließen und vertikal versetzt und/oder lamellenartig aneinander vorbeiführbar sind.

3. Vorrichtung nach einem der beiden vorigen Ansprüche, **dadurch gekennzeichnet, dass** Luftleitelemente die Fläche der Drehgestellaussparung bündig zur Wagenkastenunterseite verringern.

4. Vorrichtung nach mindestens einem der vorigen Ansprüche, **dadurch gekennzeichnet, dass** tangential zur Fahrtrichtung und bündig zur Wagenkontur angeordnete Leitelemente und/oder Gummilippen den Ringspalt zwischen den Wagen teilweise oder vollständig abdecken

5. Vorrichtung nach Anspruch 1, **dadurch gekennzeichnet, dass** die Luftleitelemente und/oder Verkleidungen beweglich angebracht sind und über spezielle Vorrichtungen zum Ausgleich von Relativbewegungen zwischen zwei aufeinander folgenden Wagen und/oder zwischen Wagenkasten und Drehgestell bzw. einzelnen Drehgestellkomponenten verfügen.

6. Vorrichtung nach Anspruch 5, **dadurch gekennzeichnet, dass** die Vorrichtungen zum Ausgleich von Relativbewegungen aktive Elemente und/oder Stellglieder zur gesteuerten oder geregelten Lagekontrolle des Luftleitelementes enthalten.

7. Vorrichtung nach einem der beiden Ansprüche 5 und 6, **dadurch gekennzeichnet, dass** Lamellen- oder fächerartige, in Längs- oder Querrichtung längenveränderliche Luftleitelemente die Freigängigkeit gewährleisten und auf die Kinematik eines Drehgestells abgestimmt sind.

8. Vorrichtung nach mindestens einem der Ansprüche 5 bis 7, **dadurch gekennzeichnet, dass** Luftleitelemente gelenkig mit einer Aufhängung, die die Bewegungen aus dem Einfedern des Wagenkastens gegenüber dem Drehgestell kompensiert, befestigt sind und bei Stellung der entsprechenden Federn in Normallage die Luftleitelemente fluchtend mit der Wagenkastenaußenkontur angeordnet sind.

9. Vorrichtung nach mindestens einem der Ansprüche 5 bis 8, **dadurch gekennzeichnet, dass** Verkleidungen flexibel und/oder verformbar ausgeführt sind.

10. Vorrichtung nach Anspruch 9, **dadurch gekennzeichnet, dass** die Verkleidungen aus Gummimaterial bestehen

11. Vorrichtung nach Anspruch 9 oder 10, **dadurch gekennzeichnet, dass** die Verkleidungen mit einer mechanischen Verstärkung ausgeführt sind.

12. Vorrichtung nach Anspruch 9, **dadurch gekennzeichnet, dass** die mechanische Verstärkung aus Metall gefertigt ist.

13. Vorrichtung nach mindestens einem der Ansprüche 5 bis 12, **dadurch gekennzeichnet, dass** ein Gestänge die Luftleitelemente in einer optimalen Position hält und/oder berührungsfrei zu einem beweglichen Bauteil mitführt.

14. Vorrichtung zur Reduzierung der Exposition bezüglich Unterfluranströmung von Bauteilen des Drehgestells oder Bauteilen im Drehgestell oder Bauteilen am Unterboden des Wagenkastens, **dadurch gekennzeichnet dass** die Bauteile mit ihrer Unterkante gleich hoch oder oberhalb der unteren Fahrzeugkontur angeordnet sind.

15. Vorrichtung nach Anspruch 14, **dadurch gekennzeichnet, dass** die untere Fahrzeugkontur der Unterboden eines Fahrzeugs einschließlich des Übergangs zur Seitenwand ist.

16. Vorrichtung nach mindestens einem der Ansprüche 14 und 15, **dadurch gekennzeichnet, dass** eine Anordnung eines Fahrmotors mit dessen Unterkante etwa bündig zur Unterkante des Wagenkastens erfolgt.

17. Vorrichtung nach mindestens einem der Ansprüche 14 bis 16, **dadurch gekennzeichnet, dass** eine Bremseinrichtung im Hinblick auf Schotterschutz durch Vermeidung der Verwirbelung der Luft optimiert ist, die aus dem Strömungsnachlauf einer dicht über der Schotterfläche befindlichen Querverbindung stammt.

18. Vorrichtung nach Anspruch 17, **dadurch gekennzeichnet, dass** eine Bremseinrichtung besteht, die keine Querverbindung zwischen den beiden in Längsrichtung über den Gleisen positionierten Elementen aufweisen.

19. Vorrichtung nach Anspruch 17, **dadurch gekennzeichnet, dass** bei einer Bremseinrichtung die Querverbindung so gestaltet ist, dass ihre Unterkante in Ruheposition oder bei Bremsung nicht aus der Wagenkastenkontur herausragt.

20. Vorrichtung nach mindestens einem der Ansprüche 17 bis 19, **dadurch gekennzeichnet, dass** die Bremseinrichtung eine Wirbelstrombremse oder eine Magnetschienenbremse ist.

21. Vorrichtung nach mindestens einem der Ansprüche 17 bis 19, **dadurch gekennzeichnet, dass** die Querverbindung ein Spurhalter ist.

22. Vorrichtung nach mindestens einem der Ansprüche 1 bis 21, **dadurch gekennzeichnet, dass** die Anwendung in Straßenfahrzeugen und/oder in startenden oder landenden Luftfahrzeugen erfolgt.

23. Verfahren zur Bewertung der Anfälligkeit einer Zuggeometrie für das Aufwirbeln von Schottersteinen und der Schadensanfälligkeit durch Schotterflug, **dadurch gekennzeichnet, dass**
- die aerodynamischen Kenngrößen Strömungsgeschwindigkeit, Wandschubspannung und Turbulenzgrad auf Höhe des Schotteroberbaus aus Simulationsrechnungen und/oder Messungen bestimmt werden und/oder
- die Freisetzungsrate von Schottersteinen und die Verteilungen von Abhebegeschwindigkeit und Flugrichtung der freigesetzten Steine ausgehend von den Simulationsrechnungen oder von Messdaten oder theoretischen Zusammenhängen bestimmt wird und/oder
- durch ballistische Modellrechnungen unter Berücksichtigung stochastischer Einflüsse die Flugbahn von einem oder mehreren Schottersteinen bestimmt werden und/oder
- mehrfach die Modellrechnungen mit variierenden oder stochastischen Anfangsbedingungen zur Bestimmung stochastischer Ergebnisgrößen wie der Trefferhäufigkeiten exponierter Bauteile wiederholt wird und/oder
- Kontakte von bewegten Schottersteinen mit dem Zug und oder dem Oberbau gezählt und quantitativ ausgewertet werden sowie die Zahl und Intensität der Kontakte bzw. die entsprechenden Häufigkeitsverteilungen einzelnen geometrischen Bauteilen des Zuges bzw. des Oberbaus zugeordnet werden und/oder
- ein Schadensausmaß durch Zuordnung von Schadensanfälligkeiten und Schadenswerten zu den Trefferorten der Zug- und/oder Oberbaugeometrie bewertet wird und/oder
- Häufigkeitsverteilungen über Anzahl, Richtung und Geschwindigkeit von seitlich unter dem Zug austretenden Schottersteinen gewonnen werden und daraus ein Gefährdungspotential für die Umgebung bestimmt wird.

24. Verfahren nach Anspruch 23, **dadurch gekennzeichnet, dass** die Flugbahnen von einem oder mehreren Schottersteinen bestimmt werden, indem die Kontakte des Schottersteins mit der Geometrie des Oberbaus und der des Zuges durch Stoßgesetze bzw. komplexere, stochastische und/oder empirische Reflektionsmodelle modelliert werden.

25. Verfahren nach mindestens einem der Ansprüche 23 und 24, **dadurch gekennzeichnet, dass** für die Stoßgesetze bzw. die komplexeren, stochastischen und/oder empirischen Reflektionsmodelle für einen Stein dessen Eintrittswinkel, Austrittswinkel, Geschwindigkeit vor und nach dem Auftreffen, Rotation, Masse, Geometrie, Materialeigenschaften und/oder Zerteilung berücksichtigt wird.
